# EUROPÄISCHE PATENTSCHRIFT

(11) **EP 1 339 586 B1**
(45) Veröffentlichungstag und Bekanntmachung des Hinweises auf die Patenterteilung: **31.05.2006**
(21) Anmeldenummer: 01999501.8
(22) Anmeldetag: 05.12.2001
(51) Int. Cl.: B60T 13/72, B60T 13/52, G01L 9/00

(54) **SENSORANORDNUNG FÜR EINEN UNTERDRUCK-BREMSKRAFTVERSTÄRKER UND DAMIT AUSGERÜSTETER UNTERDRUCK-BREMSKRAFTVERSTÄRKER**
SENSOR ARRANGEMENT FOR A VACUUM BRAKE BOOSTER AND VACUUM BRAKE BOOSTER WHICH IS EQUIPPED WITH THE SAME
DISPOSITIF CAPTEUR POUR UN SERVOFREIN A DEPRESSION ET SERVOFREIN A DEPRESSION EQUIPE DUDIT CAPTEUR

(30) Priorität: 08.12.2000 DE 10061152
(43) Veröffentlichungstag der Anmeldung: 03.09.2003
(73) Patentinhaber: Lucas Automotive GmbH, 56070 Koblenz (DE)
(72) Erfinder: BORSCH, Stefan, 56333 Winningen (DE)
(74) Vertreter: Beyer, Andreas
(86) Internationale Anmeldenummer: PCT/EP2001/014291
(87) Internationale Veröffentlichungsnummer: WO 2002/046015

(56) Entgegenhaltungen:
- DE-A- 4 436 297
- DE-C- 19 729 158
- US-A- 5 918 462
- US-B1- 6 324 845

## Beschreibung

Die Erfindung betrifft eine Sensoranordnung für einen Unterdruck-Bremskraftverstärker zur Ermittlung der in einem derartigen Bremskraftverstärker herrschenden Druckverhältnisse und einen mit einer solchen Sensoranordnung ausgerüsteten Unterdruck-Bremskraftverstärker.

Informationen über die in einem Unterdruck-Bremskraftverstärker vorherrschenden Druckverhältnisse können auf verschiedene Art und Weise genutzt werden. Beispielsweise ermöglicht die Erfassung der Druckzustände im Bremskraftverstärker die Detektierung des Aussteuerzustandes des Bremskraftverstärkers, d.h. des Zustandes, ab dem der Bremskraftverstärker nicht mehr in der Lage ist, eine weitere Druckerhöhung zu unterstützen. Darüber hinaus kann die Sensierung der Höhe des Unterdrucks in einer Unterdruckkammer des Bremskraftverstärkers beispielsweise zur Steuerung einer den Unterdruck erzeugenden Vakuumpumpe dienen.

Besonders vorteilhaft ist die Erfassung der Druckzustände bei einem mit einer elektromagnetischen Betätigungseinheit ausgestatteten Bremskraftverstärker. Eine solche elektromagnetische Betätigungseinheit ermöglicht es, zusätzlich oder alternativ zur fußkraftproportionalen Betätigung durch den Fahrer, durch Ansteuern des Bremskraftverstärkers die Fahrzeugbremsanlage zu betätigen. Beispielsweise bietet die erwähnte elektromagnetische Betätigungseinheit in einer kritischen Fahrsituation, z.B. bei einer Notbremsung die Möglichkeit, den Bremskraftverstärker unabhängig von der Fußbetätigungskraft des Fahrers voll auszusteuern und so die maximal mögliche Bremskraftunterstützung zur Verfügung zu stellen (sogenannte Bremsassistenzfunktion). Die Druckaufbaugeschwindigkeit in der Arbeitskammer eines Bremskraftverstärkers kann dazu herangezogen werden zu erkennen, wann eine Bremsung eine Notbremsung ist. Auch bei der Durchführung vollständig automatisch ablaufender Bremsungen, beispielsweise im Zusammenwirken mit einem Abstandsregelungssystem, ist die Kenntnis der im Bremskraftverstärker vorherrschenden Druckverhältnisse von Interesse.

Zur Messung des Druckes in einem Unterdruck-Bremskraftverstärker werden üblicherweise Drucksensoren eingesetzt, deren Signale von einem in der Regel elektronischen Steuergerät verarbeitet werden, um die elektromagnetische Betätigungseinheit in gewünschter Weise zu steuern.

Bei einem aus der gattungsgemäßen DE 44 36 297 A1 bekannten Unterdruck-Bremskraftverstärker ist ein Drucksensor starr mit einer zwischen einer Unterdruckkammer und einer Arbeitskammer angeordneten beweglichen Wand verbunden. Eine Messung des in der Unterdruckkammer vorliegenden Druckes erfolgt durch einen zweiten Drucksensor, der entweder außerhalb eines Bremskraftverstärkergehäuses oder innerhalb der Unterdruckkammer angeordnet ist.

Aus der US 4 633 757 ist ein Unterdruck-Bremskraftverstärker mit einem in einer Arbeitskammer und einem in einer Unterdruckkammer angeordneten Drucksensor bekannt, wobei die Drucksensoren jeweils an einer Innenwand eines Bremskraftverstärkergehäuses befestigt sind. Diese bekannten Anordnungen haben den Nachteil, daß die Montage und Überprüfung sowie ein ggf. erforderlicher Austausch der Drucksensoren große Schwierigkeiten bereitet und mit erheblichem Aufwand verbunden sind.

In der DE 197 29 158 C1 ist ein Unterdruck-Bremskraftverstärker mit einem Drucksensor beschrieben, der in einem Gehäuse angeordnet ist, das von außen an ein Bremskraftverstärkergehäuse angeflanscht ist. Der Drucksensor ist durch Luftführungskanäle, die sich von dem Gehäuse der Sensoranordnung in das Bremskraftverstärkergehäuse erstrecken, mit mindestens einer Arbeitskammer und mindestens einer Unterdruckkammer verbunden. Eine solche Lösung erfordert ein aufwendig ausgestaltetes System von Luftführungskanälen. Darüber hinaus entsteht durch die Anordnung des Drucksensors außerhalb des Bremskraftverstärkergehäuses ein erhöhter Raumbedarf.

Der Erfindung liegt die Aufgabe zugrunde, eine Sensoranordnung für einen Unterdruck-Bremskraftverstärker bereitzustellen, deren konstruktiver Aufbau möglichst einfach und platzsparend, gleichzeitig jedoch montage- und wartungsfreundlich ist.

Diese Aufgabe ist erfindungsgemäß mit einer Sensoranordnung gelöst, die die im Anspruch 1 angegebenen Merkmale aufweist. Die erfindungsgemäße Sensoranordnung zeichnet sich dadurch aus, daß ein Drucksensor platzsparend im Inneren eines Bremskraftverstärkergehäuses auf einem Trägerelement angeordnet ist. Die Montage oder ein ggf. erforderlicher Austausch des Sensors erfordert nur wenig Aufwand, da der auf dem Trägerelement angeordnete Drucksensor in einfacher Weise durch eine im Bremskraftverstärkergehäuse ausgebildete Bohrung im Inneren des Gehäuses plaziert werden kann. Das Anbringen spezieller Halterungen für den Drucksensor oder eine besondere Ausgestaltung des Bremskraftverstärkergehäuses ist nicht erforderlich, so daß eine rationelle serienfertigung von unterschiedlichen Bremskraftverstärkern mit dem gleichen Gehäusetyp möglich ist. Änderungen an der Verstärkergeometrie sind ebenfalls nicht erforderlich. Weiterhin weist die erfindungsgemäße Lösung den Vorteil auf, daß der Drucksensor den Druck direkt in einer Arbeitskammer bzw. einer Unterdruckkammer des Bremskraftverstärkers erfaßt, woraus eine erhöhte Meßgenauigkeit sowie eine geringere Fehleranfälligkeit resultiert.

In einer bevorzugten Ausführungsform der erfindungsgemäßen Sensoranordnung ist der Drucksensor ein Absolutdrucksensor, der den jeweils in der Unterdruckkammer oder der Arbeitskammer vorherrschenden Druck sensiert.

Vorzugsweise erfolgt der elektrische Anschluß des Drucksensors durch zumindest eine dichtend durch die Trennwand geführte Verbindungsleitung. Diese zumindest eine Verbindungsleitung kann außerhalb des Bremskraftverstärkergehäuses zu einem beliebigen Anschlußpunkt, beispielsweise zu einem elektronischen Steuergerät, geführt werden.

Gemäß einer Ausführungsform der erfindungsgemäßen Sensoranordnung ist die zumindest eine Verbindungsleitung mit dem Drucksensor über eine auf dem Trägerelement ausgebildete Leitungsbahn elektrisch leitend verbunden. Die Verbindungsleitung muß dann nicht mehr über das Trägerelement hinweg bis zum Drucksensor geführt werden, um mit einem oder mehreren elektrischen Anschlüssen des Sensors verbunden werden zu können, sondern kann in einfacher Weise unmittelbar an die auf dem Trägerelement ausgebildete Leitungsbahn angeschlossen werden.

Vorzugsweise besteht das Trägerelement aus einem elektrisch leitenden Material und ist dichtend durch die Trennwand hindurchgeführt. Bei dieser Anordnung kann auf die zuvor erwähnte elektrische Verbindungsleitung sowie auf das Anbringen einer Leitungsbahn auf dem Trägerelement verzichtet werden.

Vorzugsweise ist die zumindest eine Verbindungsleitung zu einem Anschlußstecker geführt, der außerhalb des Bremskraftverstärkergehäuses angeordnet ist. Der außerhalb des Bremskraftverstärkergehäuses angeordnete Anschlußstecker kann auch unmittelbar mit dem aus elektrisch leitendem Material bestehenden Trägerelement verbunden sein. Durch eine solche Ausgestaltung kann der Drucksensor im Bremskraftverstärkergehäuse vormontiert werden, während seine elektrische Verbindung beispielsweise mit einem elektronischen Steuergerät beim Einbau des Bremskraftverstärkers durch einfaches Anschließen des Anschlußsteckers hergestellt werden kann.

Gemäß einer weiteren Ausführungsform der erfindungsgemäßen Sensoranordnung ist die Trennwand mit der Innenseite eines insbesondere zylindrischen Sensoranordnungsgehäuses abdichtend verbunden, dessen Außenseite zum abdichtenden Eingriff mit der im Bremskraftverstärkergehäuse ausgebildeten Bohrung bestimmt ist. Diese Anordnung erlaubt es, den Drucksensor, die Trennwand sowie die elektrische(n) Verbindungsleitung(en) in dem Gehäuse vorzumontieren und anschließend in einem Arbeitsgang in die am Bremskraftverstärkergehäuse ausgebildete Bohrung einzupassen.

Vorzugsweise ist die Trennwand Teil eines Gehäuses eines elektronischen Steuergerätes, in dem eine Elektronikplatine angeordnet ist, die mit dem Drucksensor elektrisch leitend verbunden ist. Die elektrische Verbindung der Elektronikplatine mit dem Drucksensor kann entweder über die zumindest eine Verbindungsleitung oder das aus elektrisch leitendem Material bestehende Trägerelement erfolgen. Diese Ausführungsformen der vorliegenden Erfindung zeichnen sich dadurch aus, daß der Drucksensor mit dem elektronischen Steuergerät zu einer Baugruppe vormontiert werden kann. Die direkte Anflanschung des Steuergeräts am Bremskraftverstärkergehäuse ist montagefreundlich und platzsparend. Darüber hinaus ermöglicht sie kurze und damit störunanfälligere Verbindungswege der elektrischen Leitungen.

Gemäß einer bevorzugten Ausgestaltung ist das Trägerelement einstückig mit der Trennwand ausgeformt, was eine wirtschaftliche Herstellung der Sensoranordnung ermöglicht.

Ein mit der erfindungsgemäßen Sensoranordnung ausgestatteter Bremskraftverstärker ist wirtschaftlich herstellbar, da die Sensoranordnung ohne besondere Änderungen des Bremskraftverstärkergehäuses oder der Bremskraftverstärkergeometrie auf montagefreundliche Weise im Inneren der Unterdruckkammer und/oder der Arbeitskammer des Bremskraftverstärkers plaziert werden kann. Die Anordnung der Drucksensoren im Inneren des Bremskraftverstärkergehäuses ist nicht nur besonders platzsparend, sondern ermöglicht auch eine besonders zuverlässige Erfassung der im Bremskraftverstärker vorherrschenden Druckverhältnisse.

Mehrere Ausführungsbeispiele einer erfindungsgemäßen Sensoranordnung werden im folgenden anhand der beigefügten schematischen Figuren näher erläutert. Es zeigt:
- Fig. 1: eine teilweise geschnitten wiedergegebene Seitenansicht eines ersten Ausführungsbeispiels der erfindungsgemäßen Sensoranordnung,
- Fig. 2: eine Vorderansicht des in Figur 1 dargestellten Ausführungsbeispiels der erfindungsgemäßen Sensoranordnung, und
- Fig. 3: eine Draufsicht auf ein weiteres Ausführungsbeispiel der erfindungsgemäßen Sensoranordnung im montierten Zustand.

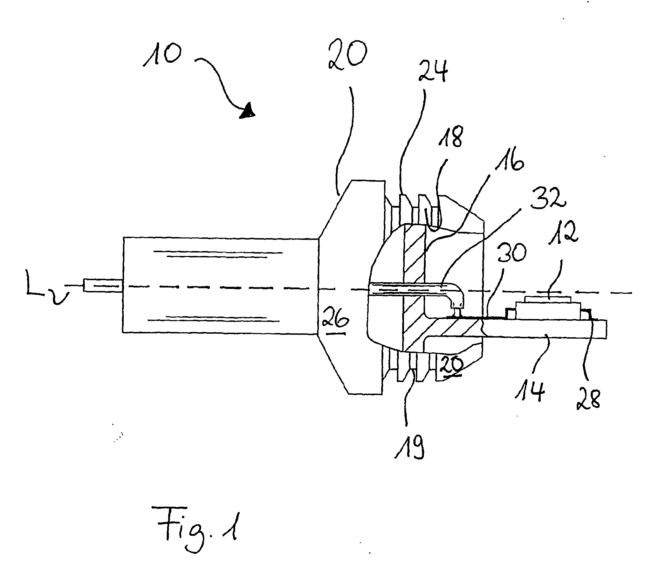

In Figur 1 ist eine erste Ausführungsform der erfindungsgemäßen Sensoranordnung 10 dargestellt. Ein als Absolutdrucksensor ausgeführter Drucksensor 12 ist auf einem Trägerelement 14 angeordnet, das sich rechtwinklig zu einer Trennwand 16 in axialer Richtung entlang einer Längsachse L erstreckt. Das Trägerelement 14 und die Trennwand 16 sind als einstückiges Bauteil, beispielsweise als Kunststoffspritzgußteil, ausgeführt. Die Trennwand 16 ist dichtend mit der Innenseite 18 eines im wesentlichen hohlzylindrisch geformten ersten Abschnitts 20 eines Gehäuses 22 der Sensoranordnung 10 verbunden. Der erste Gehäuseabschnitt 20 ist auf einem Bereich seines Außenumfangs 19 mit Dichtungsrippen 24 versehen. An den ersten Gehäuseabschnitt 20 schließt sich ein zweiter Gehäuseabschnitt 26 an. Der Durchmesser des zweiten Gehäuseabschnitts 26 ist in einem dem ersten Gehäuseabschnitt 20 benachbarten Bereich im Vergleich zum Durchmesser des ersten Gehäuseabschnitts 20 zunächst erweitert und verringert sich dann kontinuierlich entlang der Längsachse L, bevor er schließlich entlang der Längsachse L konstant bleibt.

Der Drucksensor 12 weist auf zwei gegenüberliegenden Seiten elektrische Anschlüsse 28 auf, die mit einer auf dem Trägerelement 14 angeordneten metallischen Leitungsbahn 30 verlötet sind. Die metallische Leitungsbahn 30 ist fest mit dem Trägerelement 14 verbunden, so daß der Drucksensor 12 über seine mit der Leitungsbahn 30 verlöteten elektrischen Anschlüsse 28 auf dem Trägerelement 14 mechanisch verankert ist.

Mit der Leitungsbahn 30 ist auch eine Verbindungsleitung 32 elektrisch leitend verbunden, die dichtend durch die Trennwand 16 hindurch in den zweiten Abschnitt 26 des Gehäuses 20 geführt ist, wo sie beispielsweise mit einem hier nicht dargestellten Anschlußstecker verbunden sein kann.

Zum Einbau der Sensoranordnung 12 in einen Unterdruck-Bremskraftverstärker wird der erste Gehäuseabschnitt 20 in eine im Bremskraftverstärkergehäuse ausgebildete, in der Figur jedoch nicht dargestellte Bohrung gesteckt. Im montierten Zustand der Sensoranordnung 12 wirken die am Außenumfang 19 des ersten Gehäuseabschnitts 20 ausgebildeten Dichtungsrippen 24 mit einer elastischen Dichtung zusammen, die in der Bohrung in der Gehäusewand des Bremskraftverstärkers angeordnet ist, so daß der Innenraum des Bremskraftverstärkers druckdicht von der Umgebungsatmosphäre getrennt ist. Das Trägerelement 14 mit dem Drucksensor 12 ragt dann in den Innenraum des Bremskraftverstärkergehäuses hinein, während der zweite Gehäuseabschnitt 26 aus dem Bremskraftverstärkergehäuse hinausragt. Im Gehäuse 22 dichtet die Trennwand 16 gegen die Umgebungsatmosphäre ab. Je nachdem, wo die im Bremskraftverstärkergehäuse ausgebildete Bohrung angeordnet ist, kann das gezeigte Ausführungsbeispiel der erfindungsgemäßen Sensoranordnung zur Erfassung der Druckverhältnisse in einer Unterdruckkammer oder einer Arbeitskammer eines Bremskraftverstärkers verwendet werden. Darüber hinaus ist es ebenfalls möglich, zwei erfindungsgemäße Sensoranordnungen einzusetzen, von denen eine der Druckerfassung in der Unterdruckkammer und die andere der Druckerfassung in der Arbeitskammer des Bremskraftverstärkers dient.

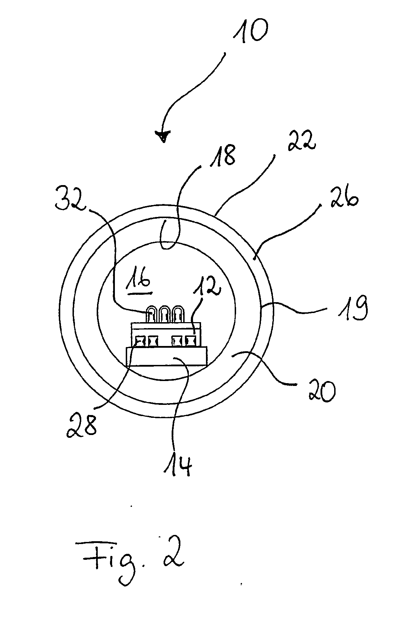

Wie aus Figur 2 ersichtlich ist, weist der Drucksensor 12 auf seiner einen Seite vier elektrische Anschlüsse 28 auf. Einer der vier Anschlüsse 28 kann zur einmaligen Kalibrierung des Drucksensors 12 verwendet werden, während die anderen drei Anschlüsse 28 der eigentlichen Funktion des Drucksensors 12, nämlich der Erfassung der Druckverhältnisse im Inneren des Bremskraftverstärkergehäuses dienen.

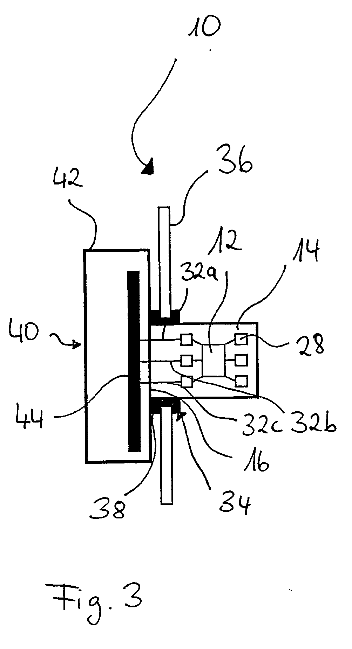

In der Figur 3 ist ein weiteres Ausführungsbeispiel der erfindungsgemäßen Sensoranordnung 10 im montierten Zustand wiedergegeben. Das Trägerelement 14 mit dem Drucksensor 12 ragt durch eine Bohrung 34 in der Gehäusewand 36 in das Innere eines hier nicht vollständig dargestellten Bremskraftverstärkergehäuses. Mittels eines Dichtelementes 38 ist ein elektronisches Steuergerät 40 abdichtend unmittelbar an die Gehäusewand 36 angeflanscht. Die Trennwand 16, die den Innenraum des Bremskraftverstärkergehäuses von der Umgebungsatmosphäre trennt, wird von einem Bereich eines Steuergerätegehäuses 42 gebildet. Das Steuergerät 40 beinhaltet eine Elektronikplatine 44, die über die Verbindungsleitungen 32a, 32b und 32c direkt mit den elektrischen Anschlüssen 28 des Drucksensors 12 elektrisch leitend verbunden ist.

Gemäß einem weiteren, hier nicht dargestellten Ausführungsbeispiel besteht das Trägerelement 14 aus einem elektrisch leitenden Material, beispielsweise aus Metall. Die elektrischen Anschlüsse 28 des Drucksensors 12 sind dann unmittelbar mit dem Trägerelement 14 elektrisch leitend verbunden. Das Trägerelement 14 ist dichtend durch die Trennwand 16 geführt und kann außerhalb des Bremskraftverstärkergehäuses beispielsweise mit einem elektrischen Anschlußstecker verbunden sein.

## Patentansprüche

1. Sensoranordnung (10) für einen Unterdruckbremskraftverstärker, der ein Bremskraftverstärkergehäuse mit zumindest einer Unterdruckkammer und zumindest einer davon durch eine bewegliche Wand getrennten Arbeitskammer, die wahlweise mit Unterdruck oder wenigstens Atmosphärendruck verbindbar ist, sowie eine im Bremskraftverstärkergehäuse angeordnete Bohrung (34) aufweist, wobei die Sensoranordnung (10) aufweist:
- eine Trennwand (16), die im montierten Zustand der Sensoranordnung (10) das Bremskraftverstärkergehäuse gegen die Umgebungsatmosphäre abdichtet, und
- ein im montierten Zustand der Sensoranordnung (10) durch die Bohrung (34) geführtes und im Inneren des Bremskraftverstärkergehäuses angeordnetes Trägerelement (14) mit einem Drucksensor (12), wobei das Trägerelement (14) mit dem Drucksensor (12) so in das Innere des Bremskraftverstärkergehäuses hineinragt, daß der Drucksensor (12) in der Unterdruckkammer oder der Arbeitskammer des Bremskraftverstärkers plaziert ist.

2. Sensoranordnung nach Anspruch 1,
**dadurch gekennzeichnet, daß** der Drucksensor (12) ein Absolutdrucksensor ist.

3. Sensoranordnung nach einem der vorhergehenden Ansprüche,
**dadurch gekennzeichnet, daß** der elektrische Anschluß des Drucksensors (12) durch zumindest eine dichtend durch die Trennwand (16) geführte Verbindungsleitung (32, 32a, 32b, 32c) erfolgt.

4. Sensoranordnung nach Anspruch 3,
**dadurch gekennzeichnet, daß** die zumindest eine Verbindungsleitung (32, 32a, 32b, 32c) mit dem Drucksensor (12) über eine auf dem Trägerelement (14) ausgebildete Leitungsbahn (30) elektrisch leitend verbunden ist.

5. Sensoranordnung nach Anspruch 1 oder 2,
**dadurch gekennzeichnet, daß** das Trägerelement (14) aus einem elektrisch leitenden Material besteht und dichtend durch die Trennwand (16) hindurchgeführt ist.

6. Sensoranordnung nach Anspruch 3 oder 4,
**dadurch gekennzeichnet, daß** die zumindest eine Verbindungsleitung (32, 32a, 32b, 32c) zu einem Anschlußstecker geführt ist, der außerhalb des Bremskraftverstärkergehäuses angeordnet ist.

7. Sensoranordnung nach Anspruch 5,
**dadurch gekennzeichnet, daß** das aus elektrisch leitendem Material bestehende Trägerelement (14) zu einem Anschlußstecker geführt ist, der außerhalb des Bremskraftverstärkergehäuses angeordnet ist.

8. Sensoranordnung nach einem der vorhergehenden Ansprüche,
**dadurch gekennzeichnet, daß** die Trennwand (16) mit der Innenseite (18) eines insbesondere zylindrischen Gehäuses (20) abdichtend verbunden ist, dessen Außenseite (19) zum abdichtenden Eingriff mit der im Bremskraftverstärkergehäuse ausgebildeten Bohrung (34) bestimmt ist.

9. Sensoranordnung nach einem der vorhergehenden Ansprüche,
**dadurch gekennzeichnet, daß** die Trennwand (16) Teil eines Gehäuses (42) eines elektronischen Steuergerätes (40) ist, in dem eine Elektronikplatine (44) angeordnet ist, die mit dem Drucksensor (12) elektrisch leitend verbunden ist.

10. Sensoranordnung nach einem der vorhergehenden Ansprüche,
**dadurch gekennzeichnet, daß** das Trägerelement (14) einstückig mit der Trennwand (16) ausgeformt ist.

11. Unterdruckbremskraftverstärker mit einem Bremskraftverstärkergehäuse, in dem zumindest eine Unterdruckkammer und eine davon durch eine bewegliche Wand getrennte Arbeitskammer, die wahlweise mit Unterdruck oder wenigstens Atmosphärendruck verbindbar ist, angeordnet sind,
**gekennzeichnet durch** eine Sensoranordnung gemäß einem der Ansprüche 1 bis 10.

## Claims

1. Sensor arrangement (10) for a vacuum brake booster comprising a brake booster housing with at least one vacuum chamber and at least one working chamber which is separated from the latter by a moveable wall and is selectively connectable either to vacuum or at least atmospheric pressure, as well as a bore (34) disposed in the brake booster housing, the sensor arrangement (10) comprising:
- a partition (16), which seals the brake booster housing off from ambient atmosphere when the sensor arrangement (10) is in the assembled state, and
- a carrier element (14) with a pressure sensor (12), which element is passed through the bore (34) and disposed in the interior of the brake booster housing when the sensor arrangement (10) is assembled, wherein the carrier element (14) with the pressure sensor (12) projects into the interior of the brake booster housing such that the pressure sensor (12) is positioned in the vacuum chamber or the working chamber of the brake booster.

2. Sensor arrangement according to Claim 1,
**characterized in that** the pressure sensor (12) is an absolute pressure sensor.

3. Sensor arrangement according to one of the preceding Claims,
**characterized in that** the pressure sensor (12) is electrically connected via at least one connecting line (32, 32a, 32b, 32c) which is passed through the partition (16) in sealing fashion.

4. Sensor arrangement according to Claim 3,
**characterized in that** the, at least one, connecting line (32, 32a, 32b, 32c) is connected in an electrically conductive manner to the pressure sensor (12) via a conductor track (30) formed on the carrier element (14).

5. Sensor arrangement according to Claim 1 or 2,
**characterized in that** the carrier element (14) consists of an electrically conductive material and is passed through the partition (16) in sealing fashion.

6. Sensor arrangement according to Claim 3 or 4,
**characterized in that** the, at least one, connecting line (32, 32a, 32b, 32c) is led to a connector which is disposed outside of the brake booster housing.

7. Sensor arrangement according to Claim 5,
**characterized in that** the carrier element (14) consisting of electrically conductive material is led to a connector which is disposed outside of the brake booster housing.

8. Sensor arrangement according to one of the preceding Claims,
**characterized in that** the partition (16) is connected in sealing fashion to the inside (18) of a particularly cylindrical housing (20) the outside (19) of which is intended to engage in sealing fashion with the bore (34) formed in the brake booster housing.

9. Sensor arrangement according to one of the preceding Claims,
**characterized in that** the partition (16) is part of a housing (42) of an electronic controller (40) in which an electronic printed circuit board (44) is disposed that is connected in an electrically conductive manner to the pressure sensor (12).

10. Sensor arrangement according to one of the preceding Claims,
**characterized in that** the carrier element (14) is formed in one piece with the partition (16).

11. Vacuum brake booster with a brake booster housing containing at least one vacuum chamber and one working chamber, which is separated from the latter by a moveable wall and is selectively connectable either to vacuum or at least atmospheric pressure,
**characterized by** a sensor arrangement according to any one of Claims 1 to 10.

## Revendications

1. Dispositif capteur (10) pour un servofrein à dépression qui présente un corps d'amplificateur de force de freinage comprenant au moins une chambre de dépression et au moins une chambre de travail séparée de ladite chambre de dépression par une paroi mobile et pouvant utiliser de façon sélective une dépression ou au moins une pression atmosphérique, ainsi qu'un alésage (34) aménagé dans le corps d'amplificateur de force de freinage, le dispositif capteur (10) présentant :
- une paroi (16) de séparation qui, à l'état monté du dispositif capteur (10), rend le corps d'amplificateur de force de freinage étanche vis-à-vis de l'atmosphère environnante, et
- un élément support (14) placé à l'intérieur du corps d'amplificateur de force de freinage et traversant l'alésage (34) à l'état monté du dispositif capteur (10), et doté d'un capteur de pression (12), l'élément support (14) équipé dudit capteur de pression (12) pénétrant de telle sorte à l'intérieur du corps d'amplificateur de force de freinage que le capteur (12) de pression est placé dans la chambre de dépression ou dans la chambre de travail du servofrein.

2. Dispositif capteur selon la revendication 1,
**caractérisé en ce que** le capteur (12) de pression est un capteur de pression absolue.

3. Dispositif capteur selon l'une des revendications précédentes,
**caractérisé en ce que** le raccordement électrique du capteur de pression (12) est assuré au moyen d'au moins un conducteur (32, 32a, 32b, 32c) qui traverse de façon étanche la paroi (16) de séparation.

4. Dispositif capteur selon la revendication 3,
**caractérisé en ce que** ledit conducteur (32, 32a, 32b, 32c) est relié de manière électriquement conductrice au capteur de pression (12) par l'intermédiaire d'une voie (30) conductrice ménagée sur l'élément support (14).

5. Dispositif capteur selon la revendication 1 ou 2,
**caractérisé en ce que** l'élément support (14) se compose d'un matériau électriquement conducteur et traverse de façon étanche la paroi (16) de séparation.

6. Dispositif capteur selon la revendication 3 ou 4,
**caractérisé en ce que** ledit conducteur (32, 32a, 32b, 32c) est amené à un connecteur disposé en dehors du corps d'amplificateur de force de freinage.

7. Dispositif capteur selon la revendication 5,
**caractérisé en ce que** l'élément support (14) composé d'un matériau électriquement conducteur est amené à un connecteur disposé en dehors du corps d'amplificateur de force de freinage.

8. Dispositif capteur selon l'une des revendications précédentes,
**caractérisé en ce que** la paroi (16) de séparation est reliée de façon étanche à la face intérieure (18) d'un boîtier (20) notamment cylindrique dont la face extérieure (19) est destinée à être en prise de façon étanche avec l'alésage (34) ménagé dans le corps d'amplificateur de force de freinage.

9. Dispositif capteur selon l'une des revendications précédentes,
**caractérisé en ce que** la paroi (16) de séparation fait partie intégrante d'un boîtier (42) d'un appareil (40) de commande électronique dans lequel est placée une platine (44) électronique reliée de manière électriquement conductrice au capteur (12) de pression.

10. Dispositif capteur selon l'une des revendications précédentes,
**caractérisé en ce que** l'élément support (14) est formé d'un seul tenant avec la paroi (16) de séparation.

11. Servofrein à dépression comprenant un corps d'amplificateur de force de freinage dans lequel sont disposées au moins une chambre de dépression et une chambre de travail séparée par une paroi mobile de ladite chambre de dépression et pouvant utiliser de façon sélective une dépression ou au moins une pression atmosphérique,
**caractérisé par** un dispositif capteur selon l'une des revendications 1 à 10.
